# FASCICULE DE BREVET EUROPEEN

(11) **EP 2 288 574 B1**
(45) Date de publication et mention de la délivrance du brevet: **25.04.2012**
(21) Numéro de dépôt: 09750030.0
(22) Date de dépôt: 29.04.2009
(51) Int. Cl.: C01B 3/06, C01B 3/02, C01G 31/02, H01M 8/06, C01G 19/02, C01G 23/04, C01G 30/00, C01G 39/02, C01G 45/02, C01G 51/04, C01F 17/00

(54) **SYSTEME DE PRODUCTION AUTONOME D'HYDROGENE POUR UN SYSTEME EMBARQUE**
AUTONOMES WASSERSTOFFERZEUGUNGSSYSTEM FÜR EIN BORDSYSTEM
SYSTEM FOR THE AUTONOMOUS GENERATION OF HYDROGEN FOR AN ON-BOARD SYSTEM

(30) Priorité: 20.05.2008 FR 0853255
(43) Date de publication de la demande: 02.03.2011
(73) Titulaire: Commissariat à l'Énergie Atomique et aux Énergies Alternatives, 75015 Paris (FR)
(72) Inventeur: LE MAROIS, Gilles, F-38700 La Tronche (FR); BACLET, Philippe, F-38600 Coublevie (FR)
(74) Mandataire: Vuillermoz, Bruno
(86) Numéro de dépôt international: PCT/FR2009/050789
(87) Numéro de publication internationale: WO 2009/141549

(56) Documents cités:
- WO-A-2006/108769
- DE-A1- 2 322 702
- FR-A- 2 263 195
- US-A- 5 629 102
- TSCHOPE A ET AL: "Oxyreduction Studies on Nanostructured Cerium Oxide" NANOSTRUCTURED MATERIALS, ELSEVIER, NEW YORK, NY, US, vol. 9, no. 1-8, 1 janvier 1997 (1997-01-01), pages 591-594, XP004205470 ISSN: 0965-9773
- ABANADES S ET AL: "Thermochemical hydrogen production from a two-step solar-driven water-splitting cycle based on cerium oxides" SOLAR ENERGY, PERGAMON PRESS. OXFORD, GB, vol. 80, no. 12, 1 décembre 2006 (2006-12-01), pages 1611-1623, XP026058563 ISSN: 0038-092X [extrait le 2006-11-26]

## Description

### DOMAINE DE L'INVENTION

La présente invention a trait aux systèmes embarqués, dont la propulsion est assurée grâce à l'hydrogène.

Plus précisément, elle propose un système autonome de production d'hydrogène *in situ,* mettant en oeuvre un matériau M régénérable.

### ETAT ANTERIEUR DE LA TECHNIQUE

L'hydrogène (H₂) est aujourd'hui considéré comme le vecteur énergétique du futur, particulièrement adapté pour la propulsion de systèmes embarqués (transport, engins de chantiers,...), en remplacement des carburants fossiles.

Ainsi, il devrait permettre :
- de faire face à la pénurie de combustibles fossiles ;
- de ne pas émettre de CO₂ lors de son utilisation pour la propulsion de systèmes embarqués, et donc de réduire l'impact des activités humaines sur le changement climatique ;
- de ne pas émettre de polluants lors de son utilisation pour la propulsion de systèmes embarqués via une pile à combustible, et donc de réduire les impacts sur la santé, particulièrement dans les zones à forte concentration humaine ;
- de réduire fortement les nuisances sonores grâce à son utilisation pour la propulsion de systèmes embarqués via une pile à combustible.

Toutefois et en particulier pour les systèmes embarqués, le recours à ce vecteur énergétique se heurte à un certain nombre de difficultés de différentes natures :
Ainsi, si l'hydrogène est très abondant, il n'est toutefois pas une ressource directement disponible : il est lié à d'autres éléments chimiques, formant ainsi diverses molécules généralement très stables telles que l'eau, le gaz naturel,.... Il faut donc le produire à partir de ces molécules selon divers procédés. Les procédés les plus employés sont le reformage de combustibles fossiles et l'électrolyse de l'eau.

Par ailleurs et dans le cadre de son utilisation comme vecteur de propulsion de systèmes embarqués, les stratégies mises en oeuvre ou envisagées à ce jour consistent à produire l'hydrogène *ex situ,* à le transporter, à le distribuer via des infrastructures dédiées, à le stocker dans des réservoirs embarqués et à le convertir en énergie électrique via une pile à combustible, ou directement en énergie mécanique par combustion interne. Des contraintes propres résultent de ces différentes opérations :
- la production se faisant essentiellement par reformage de combustibles fossiles avec émission de CO₂, elle n'obère pas le problème d'émission de gaz à effet de serre (GES) ;
- le transport et la distribution nécessitent de mettre en place des infrastructures qui représentent un investissement très important. Se pose également le problème de la réglementation encore non résolue et de la sécurité liée à l'hydrogène ;
- le stockage embarqué, compte tenu de la faible densité volumique de l'hydrogène, est également très contraignant. Les solutions envisagées posent des problèmes de sécurité (haute pression) ou de complexité (hydrures).

Il existe donc un besoin évident de développer des solutions techniques simplifiées permettant d'utiliser l'hydrogène comme vecteur de propulsion de systèmes embarqués.

Différents systèmes de production embarquée d'hydrogène ont certes déjà été proposés dans l'art antérieur:
Ainsi, le document US 2005/0089735 décrit un réservoir de stockage d'hydrures, couplé à une pile à combustible (PAC) et une pompe à chaleur (PCH). Cependant, ce réservoir nécessite, après épuisement de l'hydrogène stocké sous forme d'hydrures, de le remplir à nouveau avec de l'hydrogène. Ceci implique de disposer d'infrastructures lourdes de production, de distribution et de stockage de l'hydrogène.

Il a également été proposé d'exploiter la réaction chimique avec un sel de la famille des borohydrures ou de leurs dérivés. Malheureusement, cette réaction n'est pas ou très difficilement réversible et nécessite, après consommation, le changement de réactif.

Dans ces deux cas, le réservoir consomme son combustible, ce qui nécessite de le réapprovisionner régulièrement.

L'électrolyse de l'eau, en particulier à l'aide d'électrolyseur PEM (« *Proton Exchange Membrane* »), a aussi été envisagée. Dans ce cas, on peut effectivement fonctionner sans apport de matière externe, l'eau utilisée par l'électrolyseur étant compensée par celle produite par la pile à combustible. Cependant, le bilan énergétique est défavorable.

Il existe par ailleurs des électrolyseurs alimentés par des panneaux solaires ou par des éoliennes. Cependant, l'énergie produite est intermittente et n'est pas suffisante pour propulser un système embarqué.

Le reformage interne de combustibles fossiles ou de biocarburants a également été proposé mais ce processus produit des impuretés et des polluants.

Selon une autre orientation et pour disposer d'une source de production d'hydrogène qui ne consomme pas de matière, hormis de l'eau, et ne rejette pas de polluants, des recherches se sont concentrées sur les cycles thermochimiques de l'eau, dont la réaction globale s'écrit:

H₂O ⇔ H₂ + ½ O₂

Cette réaction est très déficitaire en énergie, c'est à dire endothermique, et nécessite, pour une dissociation directe, des températures très élevées, supérieures à 2 000°C.

Les cycles thermochimiques de l'eau, qui mettent en jeu plusieurs réactions chimiques, visent à baisser cette température à un niveau compatible avec celui de sources de chaleur disponibles.

Ainsi, le DOE (« *Department of'Energy* ») américain a publié une base de référence de plus de 200 cycles thermochimiques, à partir de laquelle la plupart des recherches ont été entreprises. Les sources de chaleur envisagées pour ces cycles sont de type nucléaire, solaire haute température ou géothermique. Il a également décrit d'autres cycles fonctionnant à des températures aussi basses que 500°C, tels que des cycles Cu-Cl, RbI, KBi. Cependant, il s'agit de cycles complexes, dont la mise en oeuvre est peu compatible avec une application embarquée. WO 2006/108769 divulgue un réacteur pour la production quasi-continue d'hydrogène en contractant de la vapeur d'eau avec un oxyde métallique puis en régénérant cet oxyde.

Parmi l'ensemble des solutions techniques décrites, la présente invention s'inspire du système décrit dans le document US 2005/089735, tout en surmontant les difficultés liées à la technologie décrite dans ce document.

### EXPOSE DE L'INVENTION

Ainsi, la présente invention propose une production embarquée d'hydrogène, adaptée au profil de charge du besoin et au couplage de cette production avec sa conversion en énergie électrique et/ou mécanique, via une pile à combustible ou via un moteur à combustion.

Selon certains modes de réalisation, l'ensemble se trouve au sein d'un système ne nécessitant pas d'apport externe de matière ni d'électricité. Dans ce cas, l'invention concerne un système embarqué fonctionnant sans apport de matière et d'énergie autres que celles puisées dans l'environnement ambiant via une pompe à chaleur.

Plus généralement et dans son principe, l'invention concerne un système de production d'hydrogène à partir d'un matériau, comprenant un compartiment destiné à régénérer le matériau utilisé, grâce à un apport d'énergie.

Ainsi et selon un premier aspect, la présente invention a trait à un système de production ou générateur d'hydrogène à partir d'un matériau M servant de réactif, ledit système comprenant un système de régénération du matériau M consommé par la production d'hydrogène dans un dispositif embarqué.

Le matériau M est un oxyde formant un composé au moins binaire avec l'oxygène.

De manière caractéristique, l'oxyde se présente sous la forme d'un matériau poreux.

Par définition, un matériau poreux se caractérise par une porosité ouverte permettant aux fluides de diffuser à travers le matériau et par une forte surface spécifique totale ou BET. Selon l'invention et pour accroître la cinétique de production d'H₂ et d'O₂, des matériaux oxydes poreux présentant une haute surface spécifique, avantageusement supérieure ou égale à 50 m²/g et pouvant même atteindre 1 500 m²/g, sont mis en oeuvre.

De manière avantageuse, l'oxyde mis en oeuvre dans le cadre de l'invention est un matériau mésoporeux, défini comme présentant une porosité comprise entre 2 et 50 nanomètres selon la norme IUPAC.

Les définitions, paramètres et méthodes de mesure relatifs aux matériaux poreux sont connus de l'homme du métier et sont notamment décrits dans le document Rouquerol *et al*. [1].

Dans le choix de cycles thermochimiques produisant de l'hydrogène et de l'oxygène à partir de l'eau, les matériaux (M) présentant deux formes d'oxydes de valence différente sont avantageusement choisis.

En effet, ils présentent l'avantage de pouvoir réaliser ce cycle en deux étapes, ce qui simplifie leur mise en oeuvre pour une application embarquée. Les réactions mises en jeu s'écrivent:

M+H₂O ⇒ MO+H₂ (1)

MO ⇒ M + ½ O₂ (2)

En pratique, le système de production de H₂ et de régénération prend la forme d'un double échangeur thermique bien connu de l'homme du métier. Ainsi, chacune des deux réactions a lieu à l'un des deux échangeurs E1 et E2, dont le fonctionnement peut être commuté.

Parmi ces matériaux (M), les oxydes de vanadium (V) font partie de la famille d'oxydes qui, comme les oxydes de cérium (Ce), de titane (Ti) mais aussi de manganèse (Mn), de cobalt (Co), d'antimoine (Sb), de molybdène (Mo) ou d'étain (Sn), présentent des propriétés redox remarquables, largement exploitées pour catalyser différentes réactions d'oxydo-réduction. Ceux-ci sont avantageusement mis en oeuvre dans le cadre de la présente invention.

Ainsi, l'invention s'applique à ces différents couples oxydes, éventuellement en présence de catalyseurs nobles et dopants.

Parmi eux, le couple V₂O₃/V₂O₄ (V^{III}/V^{IV}) est avantageusement choisi car il présente les avantages suivants:
- le vanadium est l'un des éléments les plus légers, ce qui offre un gain de poids pour une application embarquée ;
- les deux réactions mises enjeu s'écrivent :

   V₂O₄ ⇒ V₂O₃ + ½ O₂. (3)

   V₂O₃+ H₂O ⇒ V₂O₄+ H₂ (4)

Il s'avère que les réactions (3) et (4) sont endothermiques et nécessitent chacune un apport de chaleur à peu près équivalent. Ainsi, cette propriété est exploitée en maintenant les deux compartiments à la même température. De ce fait, la commutation entre les deux circuits ne nécessite pas de délai de remise à l'équilibre des températures des deux compartiments et permet une alimentation en H₂/O₂ de façon quasi-continue.

Par ailleurs, ces deux réactions nécessitent un certain niveau de température, qui peut être fourni par la pompe à chaleur, la pile ou le moteur à combustion interne. La pile et le moteur peuvent délivrés une température qui, généralement, n'excède pas 900°C. Pratiquement et compte tenu des pertes, on estime que la température maximum disponible dans un véhicule est de 600°C.

Plus généralement, l'invention s'applique à tout système mettant en jeu les réactions (1) et (2) dont la température de réaction n'excède pas 600°C. Par ailleurs, plus la température est basse et plus on dispose de source de chaleur pour alimenter les réactions, ce qui offre plus de souplesse.

En pratique, elle s'applique aux couples Ce^{III}/Ce^{IV}, Ti^{III}/Ti^{IV}, Mn^{III}/Mn^{IV}, Co^{II}/Co^{III}, Sb^{III}/Sb^{IV}, V^{IV}/V^{V}, Sn^{III}/Sn^{IV} et Mo^{III}/Mo^{IV}, qui présentent des propriétés redox et thermodynamiques similaires. Comme déjà dit, le couple préféré est V^{III}/V^{IV}.

Par ailleurs et pour réduire ladite température de réaction, l'invention propose différents modes de réalisation privilégiés :
- il s'avère que la réaction (2) ne dépend que de la pression partielle d'oxygène. En maintenant cette pression à 0,01 mbar (soit un vide primaire facilement atteignable), on facilite la réaction et on abaisse la température de dissociation de cette réaction. En pratique, la pression qui règne dans le système de régénération selon l'invention est donc avantageusement inférieure ou égale à 0,01 mbar.
- J. Schoiswohl *et al*. ont montré que la réduction d'oxydes de vanadium est catalysée en surface [2]. Dans le cadre de l'invention, en utilisant des matériaux oxydes mésoporeux pour lesquels les effets de surface deviennent non négligeables, la température des réactions (1) et (2) se trouve réduite.
- L'équipe de A. Kohl *et al* a montré que le Rh agit comme un catalyseur de réduction des oxydes de vanadium [3], ce qui tend à baisser la température de la réaction (2), et celle de F. Sadi *et al*. a montré que le Rh favorise également la réaction (1), appliquée à l'hydrolyse de Ce^{III}. Selon un mode de réalisation privilégié, des nanoparticules de métaux nobles, tels que le Rh mais aussi Pt, Pd, Ir, Os, Au ou Ag, sont déposées à la surface des matériaux mis en oeuvre dans le cadre de l'invention.
- H. Kaneko *et al*. ainsi que P.R. Shah *et al.* ont montré que le dopage en surface d'oxydes de cérium ou de vanadium avec des cations de valence inférieure tend à faciliter la réaction (1) et à réduire sa température [5,6]. Ainsi et de manière privilégiée, les couples d'oxydes cités plus haut sont dopés à l'aide de cations de valence inférieure, en pratique de valence 2 et 3 pour V, Ce, Ti, Sb ou de valence 1 et 2 pour Mn et Co.

En ajoutant de petites quantités d'hydrogène (H₂) libéré par la réaction (par exemple par balayage de MO par un mélange H₂/H₂O), on abaisse le potentiel d'oxygène et on favorise la réaction de régénération (2). Ainsi et selon un mode de réalisation privilégié, le système selon l'invention comprend des moyens de prélèvement et de réintroduction, dans le système de régénération, de l'hydrogène produit.

Par ailleurs, en ajoutant de petites quantités d'oxygène (O₂), prélevées par exemple dans l'air ambiant (par exemple par balayage de M par un mélange O₂/ H₂O), on augmente le potentiel d'oxygène et on favorise la réaction (1). Cette réaction produit un mélange H₂/H₂O que l'on peut aisément séparer, par exemple sur une membrane en palladium.

Enfin, en utilisant une petite partie de l'énergie électrique fournie par la pile ou par le générateur électrique pour oxyder M ou réduire MO, on facilite les réactions (1) ou (2).

Comme déjà dit, le système de production d'hydrogène selon l'invention a pour vocation à être intégré dans un dispositif plus complexe, en particulier un dispositif embarqué.

Avantageusement, il comprend un réservoir apte à stocker tout ou partie de l'hydrogène produit.

Egalement de manière avantageuse, il est destiné à alimenter en hydrogène, mais aussi en oxygène, un système de conversion d'énergie chimique en énergie électrique ou mécanique ou thermique, lui-même destiné à alimenter une charge.

Le système de conversion prend avantageusement la forme d'une pile à combustible (PAC) ou un moteur à combustion d'H₂, avantageusement couplé à un générateur électrique, par exemple un alternateur, une turbine ou un dispositif thermoélectrique. Dans le cas d'un moteur, celui-ci peut en outre être alimenté par un autre carburant.

Pour mieux contrôler l'alimentation de ce système de conversion en H₂ et en O₂, il est possible d'agir de deux manières:
- par un ajustement des pressions au-dessus des réactifs M et MO à l'aide de pompes à vide ;
- en plaçant en aval du générateur (système de production) des réservoirs tampons munis par exemple de vannes de régulation.

Dans un autre cas de figure, l'alimentation en hydrogène du système de conversion est complétée par un apport d'hydrogène provenant d'un réservoir à hydrogène supplémentaire.

Dans un autre cas de figure, les systèmes de conversion et de régénération peuvent être reliés par un circuit caloporteur.

Selon un mode de réalisation avantageux, le dispositif comprend en outre un dispositif d'apport d'énergie, avantageusement une pompe à chaleur pouvant être alimentée électriquement par le système de conversion. Celle-ci capte les calories dans l'environnement ambiant avec un coefficient multiplicateur désigné par COP, ladite énergie thermique étant réinjectée dans le circuit de transfert de chaleur.

Ainsi et dans un mode de réalisation particulier, le système de production d'hydrogène, le système de conversion (PAC) et la pompe à chaleur sont reliés par un circuit caloporteur, dans lequel circule un fluide caloporteur, avantageusement de l'eau, par exemple via une pompe péristaltique. La pompe à chaleur échange ses calories en vaporisant le fluide, celui-ci est ensuite réchauffé par la PAC et réchauffe à son tour E1 et E2 avec lesquels il échange ses calories et se condense. Le fluide retourne alors vers la pompe à chaleur. L'invention s'applique à tout fluide caloporteur dont la température de vaporisation n'excède pas celle fournie par la pompe à chaleur et qui est susceptible d'échanger de la chaleur jusqu'à 700°C.

A noter qu'il est possible de ne pas utiliser de pompe à chaleur. Il s'agit alors d'une version dégradée de l'invention mais qui offre cependant un avantage : elle nécessite certes un apport externe de chaleur, mais réduit : Pour un rendement de PAC de 50%, l'apport externe SQ est réduit de moitié, d'où une diminution de moitié de l'énergie consommée. Cet apport peut être obtenu en couplant le système à un moteur à combustion classique selon une configuration hybride.

Alternativement, le dispositif d'apport d'énergie est apte à apporter de l'énergie chimique et est avantageusement un réservoir d'hydrogène, ou bien il est apte à apporter de l'énergie électrique, et est avantageusement le système de conversion.

Avantageusement, le système de conversion du dispositif embarqué selon l'invention alimente une charge électrique et/ou mécanique.

### EXEMPLE DE REALISATION DE L'INVENTION

La manière dont l'invention peut être réalisée et les avantages qui en découlent ressortiront mieux de l'exemple de réalisation qui suit, donné à titre indicatif et non limitatif, à l'appui des figures annexées.
La figure 1 représente un schéma de fonctionnement du dispositif selon l'invention permettant la production autonome d'hydrogène dans un système embarqué.
La figure 2 représente un second mode de réalisation de ce même système.

### 1- Description et fonctionnement du montagne

Le système de production d'hydrogène qui va être illustré est basé sur le couple V₂O₃/V₂O₄.

Il est constitué de deux échangeurs thermiques, isolés thermiquement vis à vis de l'extérieur et chauffés via le circuit caloporteur décrit plus bas.

Le premier échangeur E1 contient initialement l'oxyde de vanadium V₂O₃. Il est alimenté en eau à partir du réservoir d'eau (RE) via une petite pompe péristaltique. Cet échangeur est connecté en sortie à un circuit comprenant une membrane de séparation d'hydrogène et une pompe à vide qui extrait l'hydrogène formé selon la réaction:

V₂O₃ + H₂O ⇒ V₂O₄ + H₂

Le deuxième échangeur E2 contient initialement V₂O₄. Cet échangeur est connecté en sortie à un circuit comprenant une pompe à vide qui maintient, au-dessus de l'oxyde, un vide primaire et extrait l'oxygène formé selon la réaction:

V₂O₄ ⇒ V₂O₃ + ½ O₂

Dans cet échangeur, on régénère ainsi V₂O₃.

Le système produit de l'hydrogène et de l'oxygène très purs, dont le ratio H/O (globalement égal à 2) et la cinétique de production peuvent être ajustés.

Après épuisement de V₂CO₃ dans E1 et sa régénération dans E2, on commute les connections des circuits les reliant, E1 et E2 échangeant alors leur fonction. Cela permet d'alimenter le système de conversion en H₂/ O₂ de façon continue.

Ce système de production peut alimenter :
- soit une pile à combustible (PAC) qui fournit alors de l'énergie électrique, de la chaleur et de l'eau. Cette pile peut fonctionner à haute température (900°C) ou à basse température (110°C) ;
- soit un moteur à combustion fonctionnant à 900°C.

L'eau est récupérée dans le réservoir d'eau (RE) : le système ne consomme pas de matière.

L'électricité produite alimente le moteur électrique et les différentes pompes.

La pompe à chaleur, alimentée électriquement par la PAC, capte les calories dans l'environnement ambiant avec un coefficient multiplicateur désigné par COP, qu'il réinjecte dans le circuit de transfert de chaleur.

La pile (PAC), le système de production d'hydrogène et la pompe à chaleur sont reliés par un circuit caloporteur dans lequel le fluide caloporteur circule via une petite pompe péristaltique. La pompe à chaleur échange ses calories en vaporisant le fluide, celui-ci est ensuite réchauffé par la PAC et réchauffe à son tour E1 et E2 avec lesquels il échange ses calories et se condense. Le fluide retourne alors vers la pompe à chaleur.

Il existe deux cas de figures concernant l'apport d'énergie :
- soit le circuit caloporteur est en deux parties et chauffe séparément les échangeurs E1 et E2, respectivement à la température de vaporisation du fluide caloporteur via la pompe à chaleur (calories en provenance de la pompe) et à 600°C via le système de conversion. Ces deux réactions sont alors gérées indépendamment, ce qui laisse plus de choix pour le couple M/MO ;
- soit le circuit est unique et chauffe les échangeurs à la même température de vaporisation en exploitant la chaleur latente de vaporisation du fluide, par exemple l'eau. La commutation entre les deux échangeurs se fait alors sans remise en équilibre de la température ce qui permet une production en continu.

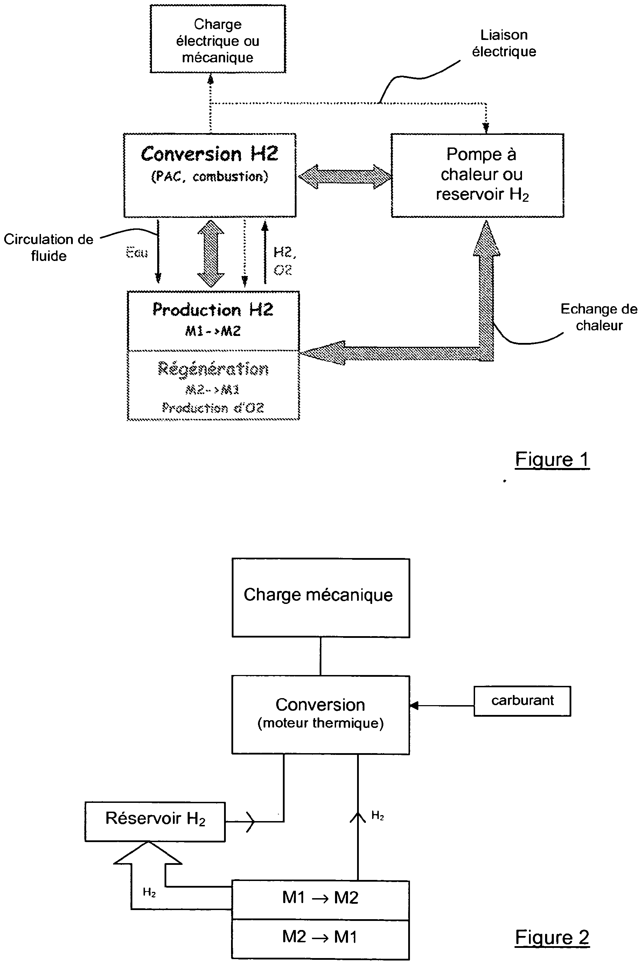

Le principe de fonctionnement général du système selon l'invention est schématisé à la Figure 1. Dans l'exemple de réalisation, M1 représente V₂O₃, M2 représente V₂O₄ et la conversion de l'hydrogène se fait au niveau d'une PAC.

La figure 2 schématise un autre dispositif selon l'invention qui se distingue en ce que :
- le système de production de H₂ est connecté à un réservoir qui permet le stockage d'une partie du H₂ produit ;
- le système de conversion, en l'occurrence un moteur thermique, est alimenté à la fois par le système de production de H₂ mais aussi par une source externe de carburant.

### 2- Test du montage

La température ambiante pour le test est de 20°C. Le circuit caloporteur est simple. La température du fluide caloporteur (eau) à l'entrée du système de production d'H₂ et d'O₂ se stabilise à 100°C. Les quantités initiales introduites sont de 8,2 kg de V₂O₃ et 9,1 kg de V₂O₄.

En régime stable, les cinétiques de production s'établissent à 180 mmole/s d'H₂ et 90 mmole/s d'O₂. Cela correspond à un apport énergétique global pour la pile à combustible (PAC), à sa température de fonctionnement égale à 100°C, de 45kW.

Le point de fonctionnement de la PAC est tel que son rendement électrique est de 50%. La PAC fournie alors 22,5kW de puissance électrique et 22,5kW de puissance thermique.

Pour compenser les 45kW nécessaires à la production d'H₂ et d'O₂, 50kW sous forme thermique ont été fournis au générateur d'H₂/O₂ : son rendement est donc de 0,9.

Ces 50kW sont fournis d'une part par la pile (22,5 kW), et d'autre part par la pompe à chaleur (27,5kW sous forme thermique). A la température de test, le rendement COP de cette pompe est de 4. La puissance électrique nécessaire pour alimenter la pompe est donc de 6,9 kW et la puissance puisée dans l'environnement est de 20,6 kW.

Le bilan de production électrique par la PAC s'établit ainsi : 6,9 kW pour la pompe à chaleur, 1 kW pour les pompes auxiliaires et 14,6 kW pour la charge électrique.

Le résultat du test montre bien que le système selon l'invention est capable d'alimenter une charge électrique (14,6 kW délivrés) grâce à un apport d'énergie puisée par la pompe à chaleur dans l'environnement (20,6 kW).

### 3/ Influence de la porosité :

### 3-1/ Synthèse d'oxyde de vanadium et dopage avec un catalyseur :

Afin de synthétiser de l'oxyde de vanadium V₂O₅ se présentant sous forme d'un matériau mésoporeux à très haute surface spécifique (>100 m²/g BET), le procédé de synthèse décrit dans la publication Harreld *et al.* [7] a été mis en oeuvre.

La préparation s'effectue par voie Sol-Gel et séchage en voie supercritique. Le gel est alors broyé sous forme de poudres micrométriques. La surface spécifique totale (BET) obtenue est alors supérieure à 220 m²/g.

Le dépôt de catalyseur Rh se fait par MOCVD sur la poudre d'oxyde. La teneur en métal déposé est de 0,5wt%. La taille des particules déposées est d'environ 1-2 nm.

### 3-2/ Test de réduction thermique de V₂O₅, en présence ou non de catalyseur

Su et Schlögl [8] ont rapporté que la décomposition thermique de V₂O₅ en VO₂, puis en V₂O₃, nécessite de chauffer l'oxyde à 600°C sous vide secondaire, pendant 1h Cependant, l'utilisation d'une pompe à vide secondaire est incompatible avec une application embarquée.

Pour les oxydes mésoporeux synthétisés, avant dépôt de Rh, les essais de décomposition thermique ont été réalisés par thermogravimétrie sous vide primaire (davantage compatible avec une application embarquée) pendant cette même durée de 1h, à 350, 400, 450, 500, 550 et 600°C.

Il a été constaté que la température de décomposition de V₂O₅ en VO₂ est abaissée à 450°C. Celle de VO₂ en V₂O₃ reste à 600°C, mais cette fois sous vide primaire.

On observe donc un effet de la structure mésoporeuse qui conduit à faciliter la réduction de ces deux formes d'oxydes.

Les mêmes tests ont été réalisés après dépôt de catalyseur Rh. La présence du catalyseur induit également une diminution de 50 à 100°C de la température de décomposition des deux oxydes, soit 500 et 400°C respectivement.

En présence d'Argon +1% d'H₂, aucune modification des températures de réduction n'est observée. Cependant, la cinétique de réduction de l'oxyde est accélérée et s'effectue en moins de 15 mn.

### 3-3/ Test d'hydrolyse de V₂O₃ et VO₂ en présence de catalyseur

L'hydrolyse s'effectue en lit fluidisé, par balayage avec de la vapeur d'eau, entre 100 et 600°C. A chaque niveau de température, on mesure, en sortie et en continu, la production d'hydrogène.

Les cinétiques de production sont exprimées en micromoles d'H₂ par seconde et par gramme de vanadium.

### a/ VO₂ +H₂O

On ne mesure pas de production d'H₂ entre 100 et 600°C. Par balayage de H₂O+5%mol d'O₂, on détecte, à 100°C, une faible production inférieure à 1.

### b/ V₂O₃ + H₂O

* Par balayage avec H₂O pur, on mesure les cinétiques suivantes : 10 à 100°C ; 12 à 200°C ; 11 à 300°C.

* Par balayage de H₂O+5%mol d'O₂, on observe une augmentation de la cinétique de production, surtout à basse température : 64 à 100°C ; 21 à 200°C.

### Conclusions :

Le couple V₂O₃/VO₂ apparaît comme un bon compromis pour la production d'hydrogène et la régénération du matériau dans des conditions compatibles avec un système embarqué.

Pour la phase de régénération, la réduction thermique de V₂O₅ en VO₂ s'effectue à plus basse température que celle de VO₂ en V₂O₃. Cependant, même dans le second cas, cette température n'excède pas 500°C.

Pour la phase de production d'H₂ (hydrolyse), en combinant mésoporosité, catalyse avec du rhodium et ajout de faible quantité d'oxygène, une cinétique de production significative et exploitable de production d'H₂ est obtenue à 100°C.

De façon plus qualitative, une technique catalytique, par promotion électrochimique appliquées à ces oxydes revêtus de Rh, a mis en évidence une augmentation de l'activité catalytique qui se traduit par une baisse de température pour les deux réactions.

### REFERENCES

[1] : J. Rouquerol et al., Pure & Appl. Chem., 66(8) (1994) 1739-1758
[2] : J. Schoiswohl et al., Phys. Rev. B71, 165437 (2005)
[3] : A. Kohl et al., Phys. Stat. Sol. (a) 173, 85 (1999)
[4] : F. Sadi et al., Journal of Catalysis 213 (2003) 226-234
[5] : H. Kaneko et al., Energy 32 (2007) 656-663
[6] : P.R. Shah et al., J. Phys. Chem. C (2008), 112, 2613-2617
[7] : J.H. Harreld et al., Materials Research Bulletin , 33(4) (1998) 561-567
[8] : D.S. Su and R. Schlögl, Catalysis Letters, 83 (2002) 3-4, 115-119

## Revendications

1. Système de production d'hydrogène pour dispositif embarqué comprenant un système de régénération du matériau consommé par la production d'hydrogène, ledit matériau étant un oxyde poreux, avantageusement mésoporeux.

2. Système de production d'hydrogène selon la revendication 1, ***caractérisé* en ce que** le matériau présente deux formes d'oxydes de valence différente.

3. Système de production d'hydrogène selon la revendication 1 ou 2, ***caractérisé* en ce que** le matériau est choisi dans le groupe constitué des oxydes de vanadium (V), de cérium (Ce), de titane (Ti), de manganèse (Mn), de cobalt (Co), d'antimoine (Sb), de molybdène (Mo) et d'étain (Sn).

4. Système de production d'hydrogène selon la revendication 3, ***caractérisé* en ce que** le matériau est le couple V₂O₃/V₂O₄.

5. Système de production d'hydrogène selon l'une des revendications précédentes, ***caractérisé* en ce que** la surface du matériau oxyde est recouverte de nanoparticules de métal noble, tel que le rhodium (Rh).

6. Système de production d'hydrogène selon l'une des revendications 2 à 5 ***caractérisé* en ce que** le couple d'oxydes est dopé à l'aide de cations de valence inférieure.

7. Système de production d'hydrogène selon l'une des revendications précédentes, ***caractérisé* en ce que** le matériau oxyde présente une surface spécifique supérieure ou égale à 50 m²/g.

8. Système de production d'hydrogène selon l'une des revendications précédentes, ***caractérisé* en ce que** le système comprend des moyens de prélèvement de l'hydrogène produit et de réintroduction dans le système de régénération.

9. Système de production d'hydrogène selon l'une des revendications précédentes, ***caractérisé* en ce que** le système de régénération est un échangeur thermique.

10. Système de production d'hydrogène selon l'une des revendications précédentes, ***caractérisé* en ce qu'**il comprend des moyens de maintien de la pression dans le système de régénération à une valeur inférieure ou égale à 0,01 mbar.

11. Dispositif embarqué comprenant un système de production d'hydrogène selon l'une des revendications 1 à 10.

12. Dispositif embarqué selon la revendication 11, ***caractérisé* en ce qu'**il comprend un réservoir apte à stocker tout ou partie de l'hydrogène produit.

13. Dispositif embarqué selon la revendication 11 ou 12, ***caractérisé* en ce qu'**il comprend en outre un système de conversion d'hydrogène, avantageusement une pile à combustible ou un moteur à combustion avantageusement couplé à un générateur électrique, alimenté par le système de production d'hydrogène.

14. Dispositif embarqué selon la revendication 13, ***caractérisé* en ce que** le moteur à combustion est alimenté par un deuxième carburant.

15. Dispositif embarqué selon l'une des revendications 13 à 14, ***caractérisé* en ce que** le système de production d'hydrogène et le système de conversion sont reliés par un circuit caloporteur dans lequel circule un fluide caloporteur.

16. Dispositif embarqué selon l'une des revendications 11 à 15, ***caractérisé* en ce que** le dispositif comprend en outre un dispositif d'apport d'énergie à la régénération.

17. Dispositif embarqué selon la revendication 16, ***caractérisé* en ce que** le dispositif d'apport d'énergie est apte à apporter de l'énergie thermique, avantageusement une pompe à chaleur.

18. Dispositif embarqué selon la revendication 16, ***caractérisé* en ce que** le dispositif d'apport d'énergie est apte à apporter de l'énergie chimique, avantageusement un réservoir d'hydrogène.

19. Dispositif embarqué selon la revendication 16, ***caractérisé* en ce que** le dispositif d'apport d'énergie est apte à apporter de l'énergie électrique, avantageusement le système de conversion.

20. Dispositif embarqué selon l'une des revendications 13 à 19, ***caractérisé* en ce que** le système de conversion alimente une charge électrique et/ou mécanique.

## Claims

1. A hydrogen generation system for an on-board device comprising a system for regenerating the material consumed by hydrogen generation, said material being a porous oxide, advantageously a mesoporous oxide.

2. The hydrogen generation system according to claim 1, **characterised in that** the material has two forms of oxides with different valences.

3. The hydrogen generation system according to claim 1 or 2, **characterised in that** the material is selected from among the group constituted by vanadium (V), cerium (Ce), titanium (Ti), manganese (Mn), cobalt (Co), antimony (Sb), molybdenum (Mo) and tin (Sn) oxides.

4. The hydrogen generation system according to claim 3, **characterised in that** the material is the V₂O₃/V₂O₄ pair.

5. The hydrogen generation system according to any one of the previous claims, **characterised in that** the surface of the oxide material is covered with nanoparticles of a noble metal, such as rhodium (Rh).

6. The hydrogen generation system according to any one claims 2 to 5, **characterised in that** the oxide pair is doped using cations with lower valence.

7. The hydrogen generation system according to any one of the previous claims, **characterised in that** the oxide material has a specific surface area greater than or equal to 50 m²/g.

8. The hydrogen generation system according to any one of the previous claims, **characterised in that** the system comprises means of removing and re-introducing the hydrogen produced in the regeneration system.

9. The hydrogen generation system according to any one of the previous claims, **characterised in that** the regeneration system is a heat exchanger.

10. The hydrogen generation system according to any one of the previous claims, **characterised in that** it comprises means of maintaining the pressure in the regeneration system at a value less than or equal to 0.01 mbar.

11. An on-board device comprising a hydrogen generation system according to any one of claims 1 to 10.

12. The on-board device according to claim 11, **characterised in that** it comprises a reservoir that can store all or part of the hydrogen produced.

13. The on-board device according to claim 11 or 12, **characterised in that** it further comprises a hydrogen conversion system, advantageously a fuel cell or a combustion engine advantageously coupled to an electric generator, powered by the hydrogen generation system.

14. The on-board device according to claim 13, **characterised in that** the combustion engine is powered by a second fuel.

15. The on-board device according to anyone of claims 13 and 14, **characterised in that** the hydrogen generation system and the conversion system are connected by a heat-transfer circuit in which a heat-transfer fluid circulates.

16. The on-board device according to any one of claims 11 to 15, **characterised in that** the device further comprises a device that supplies the energy for regeneration.

17. The on-board device according to claim 16, **characterised in that** the device for supplying energy can supply heat energy, and is advantageously a heat pump.

18. The on-board device according to claim 16, **characterised in that** the device for supplying energy can supply chemical energy, and is advantageously a hydrogen reservoir.

19. The on-board device according to claim 16, **characterised in that** the device for supplying energy can supply electrical energy, and is advantageously a conversion system.

20. The on-board device according to any one of claims 13 to 19, **characterised in that** the conversion system powers an electrical and/or mechanical load.

## Patentansprüche

1. System zum Produzieren von Wasserstoff für eine bordinterne Vorrichtung, mit einem System zum Regenerieren von Material, das durch die Erzeugung von Wasserstoff verbraucht wird, wobei dieses Material ein poröses, vorteilhaft ein mesoporöses Oxid ist.

2. Wasserstoffproduktionssystem nach Anspruch 1, **dadurch gekennzeichnet, dass** das Material zwei Oxidformen mit unterschiedlicher Valenz aufweist.

3. Wasserstoffproduktionssystem nach Anspruch 1 oder 2, **dadurch gekennzeichnet, dass** das Material aus der Gruppe gewählt ist, die gebildet ist aus Oxiden von Vanadium (V), Cerium (Ce), Titan (Ti), Mangan (Mn), Kobalt (Co), Antimon (Sb), Molybdän (Mo) und Zinn.

4. Wasserstoffproduktionssystem nach Anspruch 3, **dadurch gekennzeichnet**, das Material das Paar V₂O₃/V₂O₄ ist.

5. Wasserstoffproduktionssystem nach einem der vorhergehenden Ansprüche, **dadurch gekennzeichnet, dass** die Oberfläche des Oxidmaterials mit Nanopartikeln eines Edelmetalls wie etwa Rhodium (Rh) beschichtet ist.

6. Wasserstoffproduktionssystem nach einem der Ansprüche 2 bis 5, **dadurch gekennzeichnet, dass** das Paar von Oxiden mit Hilfe von Kationen mit geringer Valenz dotiert ist.

7. Wasserstoffproduktionssystem nach einem der vorhergehenden Ansprüche, **dadurch gekennzeichnet, dass** das Oxidmaterial eine spezifische Oberfläche größer oder gleich 50 m²/g aufweist.

8. Wasserstoffproduktionssystem nach einem der vorhergehenden Ansprüche, **dadurch gekennzeichnet, dass** das System Mittel zum Abzapfen und zum Wiedereinleiten von produziertem Wasserstoff in das Regenerationssystem umfasst.

9. Wasserstoffproduktionssystem nach einem der vorhergehenden Ansprüche, **dadurch gekennzeichnet, dass** das Regenerationssystem ein Wärmetauscher ist.

10. Wasserstoffproduktionssystem nach einem der vorhergehenden Ansprüche, **dadurch gekennzeichnet, dass** es Mittel zum Halten des Drucks in dem Regenerationssystem auf einem Wert kleiner oder gleich 0,01 mbar umfasst.

11. Bordinterne Vorrichtung, die ein Wasserstoffproduktionssystem nach einem der Ansprüche 1 bis 10 enthält.

12. Bordinterne Vorrichtung nach Anspruch 11, **dadurch gekennzeichnet, dass** sie einen Vorratsbehälter umfasst, der den gesamten produzierten Wasserstoff oder einen Teil hiervon aufbewahren kann.

13. Bordinterne Vorrichtung nach Anspruch 11 oder 12, **dadurch gekennzeichnet, dass** sie außerdem ein System zum Umwandeln von Wasserstoff, vorzugsweise eine Brennstoffzelle oder einen Verbrennungsmotor, der vorteilhaft mit einem durch das Wasserstoffproduktionssystem versorgten Stromgenerator gekoppelt ist, umfasst.

14. Bordinterne Vorrichtung nach Anspruch 13, **dadurch gekennzeichnet, dass** der Verbrennungsmotor durch einen zweiten Brennstoff versorgt wird.

15. Bordinterne Vorrichtung nach einem der Ansprüche 13 bis 14, **dadurch gekennzeichnet, dass** das Wasserstoffproduktionssystem und das Umwandlungssystem durch eine Wärmeübertragungsleitung, in der ein Wärmeübertragungsfluid zirkuliert, verbunden sind.

16. Bordinterne Vorrichtung nach einem der Ansprüche 11 bis 15, **dadurch gekennzeichnet, dass** die Vorrichtung außerdem eine Vorrichtung zum Einbringen von Energie in die Regeneration umfasst.

17. Bordinterne Vorrichtung nach Anspruch 16, **dadurch gekennzeichnet, dass** die Energieeinbringvorrichtung dazu ausgelegt ist, Wärmeenergie einzubringen, vorteilhaft eine Wärmepumpe.

18. Bordinterne Vorrichtung nach Anspruch 16, **dadurch gekennzeichnet, dass** die Wärmeeinbringenergie dazu ausgelegt ist, chemische Energie einzubringen, vorteilhaft ein Wasserstoffvorratsbehälter.

19. Bordinterne Vorrichtung nach Anspruch 16, **dadurch gekennzeichnet, dass** die Energieeinbringvorrichtung dazu ausgelegt ist, elektrische Energie einzubringen, vorteilhaft das Umwandlungssystem.

20. Bordinterne Vorrichtung nach einem der Ansprüche 13 bis 19, **dadurch gekennzeichnet, dass** das Umwandlungssystem eine elektrische und/oder mechanische Last versorgt.
